# EUROPEAN PATENT APPLICATION

(11) **EP 4 769 165 A1**
(43) Date of publication of application: **01.07.2026**
(21) Application number: 25227395.8
(22) Date of filing: 29.12.2025
(51) Int. Cl.: G06F 13/42

(54) **COMMUNICATION DEVICE, BATTERY MANAGEMENT UNIT, BATTERY MODULE, AND BATTERY CLUSTER**

(30) Priority: 30.12.2024 CN 202411976210
(71) Applicant: Xiamen Ampack Technology Limited, Xiamen City, Fujian Province, 361000 (CN)
(72) Inventor: DAI, Jinchi, 361000 Xiamen City, Fujian Province (CN)
(74) Representative: Icosa

(57) **Abstract**

A communication device including: two connectors, where each connector includes: an input terminal configured to receive a first addressing signal and an output terminal configured to output a second addressing signal; a first switching unit, connected to the input terminal; a second switching unit, connected to the output terminal; a microcontroller unit, where a signal receiving pin of the microcontroller unit is connected to the first switching unit, and a signal output pin of the microcontroller unit is connected to the second switching unit; a power supply, connected to the first switching unit and the second switching unit separately; and a signal blocking unit, disposed between the input terminal and the first switching unit. The first switching unit is configured to: connect the signal receiving pin of the microcontroller unit to a ground terminal in response to the first addressing signal received by the input terminal. The second switching unit is configured to: connect the power supply to the output terminal in response to a control signal that is output by the signal output pin of the microcontroller unit to the second switching unit. The signal blocking unit is configured to: block transmission of an electrical signal between two input terminals.

## Description

### TECHNICAL FIELD

This application relates to the technical field of electronic circuits, and in particular, to a communication device, a battery management unit, a battery module, and a battery cluster.

### BACKGROUND

**In** a battery management system, orderly and reliable communication between a battery control unit and a battery management unit is crucial for ensuring stable operation of the battery management system. To ensure normal operation of the battery management system, the battery control unit needs to perform addressing of each battery management unit to accurately identify and distinguish each battery management unit, thereby enabling monitoring and management of each battery management unit.

### SUMMARY

When developing technologies and products for communication between battery management units of a plurality of battery modules, the applicant hereof finds that, during addressing of a battery management unit, a typical addressing operation is as follows: a battery control unit sends an addressing signal to a first battery management unit, and each battery management unit detects whether the addressing signal is received, so as to confirm whether the addressing is directed to this battery management unit. After completion of the addressing operation, the battery control unit continues to provide the addressing signal to a next battery management unit, thereby completing the addressing in sequence (such an addressing method is also known as "sequential addressing").

To implement the above sequential addressing, a communication circuit interface of each battery management unit needs to be configured with two different interface types (an interface for receiving an addressing signal, and an interface for sending an addressing signal), and adjacent battery management units are required to maintain a fixed interface connection relationship to ensure that the addressing signal is transmitted between all battery management units in preset order.

Such a fixed interface connection relationship imposes a great restriction on the mounting and layout of communication harnesses and battery management units, brings many inconveniences to the assembling and maintenance of a battery management system, and also limits the flexibility and universal applicability.

To solve the above problem, the applicant hereof has developed a communication device. The communication device includes: two connectors, where each connector includes: an input terminal configured to receive a first addressing signal and an output terminal configured to output a second addressing signal; a first switching unit, connected to the input terminal; a second switching unit, connected to the output terminal; a microcontroller unit, where a signal receiving pin of the microcontroller unit is connected to the first switching unit, and a signal output pin of the microcontroller unit is connected to the second switching unit; a power supply, connected to the first switching unit and the second switching unit separately; and a signal blocking unit, disposed between the input terminal and the first switching unit. The first switching unit is configured to: connect the signal receiving pin of the microcontroller unit to a ground terminal in response to the first addressing signal received by the input terminal. The second switching unit is configured to: connect the power supply to the output terminal in response to a control signal that is output by the signal output pin of the microcontroller unit to the second switching unit. The signal blocking unit is configured to: block transmission of an electrical signal between two input terminals.

In the above communication device, by disposing the input terminal and the output terminal in each connector, this application eliminates the need to distinguish between connector types when connecting two communication devices. A communication harness between the two different communication devices may be connected to any connector in the communication device, thereby eliminating the limitation of a fixed interface connection relationship. Furthermore, the signal blocking unit disposed in the communication device limits the transmission of the electrical signal between two input terminals in the same communication device, thereby ensuring that the addressing signal is transmitted among a plurality of cascaded communication devices one after another in preset order, and successfully completing the addressing operation.

With reference to the first aspect, in a possible implementation, the input terminal of one of the connectors is connected to an output terminal of a connector of another communication device by a communication harness, and the output terminal of the one connector is connected to an input terminal of the connector of the other communication device by the communication harness.

The above terminal connection manner of the connector ensures that the correspondence between the input terminal and the output terminal is correct during the mounting and plugging of the communication harness, thereby avoiding communication faults caused by connection errors.

With reference to the first aspect or any one of the above possible implementations of the first aspect, in another possible implementation, the two connectors include: a first connector and a second connector. A position of the input terminal in the first connector corresponds to a position of the output terminal in the second connector, and a position of the output terminal in the first connector corresponds to a position of the input terminal in the second connector.

With reference to the first aspect or any one of the above possible implementations of the first aspect, in still another possible implementation, the signal blocking unit includes: a unidirectional conducting element. One end of the unidirectional conducting element is connected to the input terminal, and another end of the unidirectional conducting element is connected to the first switching unit. The unidirectional conducting element is configured to: control the electrical signal to be unidirectionally transmitted from the input terminal to the first switching unit. The unidirectional conducting element includes: a diode, a transistor, or an optocoupler.

The unidirectional transmission control implemented by the unidirectional conducting element effectively reduces the risk of crosstalk of the electrical signal from one input terminal to another input terminal through an internal circuit, thereby ensuring the independence of each connector. In this way, the signal blocking unit implemented in the form of a unidirectional conducting element is simple, easy to use, and highly reliable, thereby improving stability and safety of the communication device.

With reference to the first aspect or any one of the above possible implementations of the first aspect, in still another possible implementation, the first switching unit includes: a first resistor, a second resistor, a third resistor, and a first switch. One terminal of the first resistor is connected to the power supply, and another terminal of the first resistor is connected to a first terminal of the first switch. One terminal of the second resistor is connected to a second terminal of the first switch, and another terminal of the second resistor is connected to a control terminal of the first switch. One terminal of the third resistor is connected to the input terminal by the signal blocking unit, and another terminal of the third resistor is connected to the control terminal of the first switch. The first terminal of the first switch is further connected to the signal receiving pin of the microcontroller unit, and the second terminal of the first switch is further connected to the ground terminal. The first switch is configured to: be turned on in response to the first addressing signal received by the input terminal, so as to connect the signal receiving pin of the microcontroller unit to the ground terminal.

The first switching unit converts an external first addressing signal into a low-level signal for detecting safety of the microcontroller unit, and provides overvoltage protection, thereby effectively reducing the risk of damage to the microcontroller unit caused by the first addressing signal. Furthermore, the first switching unit is further characterized by fast response and low power consumption, thereby improving the real-time feature and reliability of the addressing signal detection.

With reference to the first aspect or any one of the above possible implementations of the first aspect, in still another possible implementation, the second switching unit includes: a fourth resistor, a fifth resistor, a sixth resistor, a seventh resistor, an eighth resistor, a second switch, and a third switch. One terminal of the fourth resistor is connected to the output terminal, and another terminal of the fourth resistor is connected to a first terminal of the second switch. One terminal of the fifth resistor is connected to a second terminal of the second switch and the power supply separately, and another terminal of the fifth resistor is connected to a control terminal of the second switch. The second terminal of the second switch is connected to the power supply. One terminal of the sixth resistor is connected to the control terminal of the second switch, and another terminal of the sixth resistor is connected to a first terminal of the third switch. One terminal of the seventh resistor is connected to a control terminal of the third switch, and another terminal of the seventh resistor is connected to a second terminal of the third switch. The second terminal of the third switch is connected to the ground terminal. One terminal of the eighth resistor is connected to the signal output pin of the microcontroller unit, and another terminal of the eighth resistor is connected to the control terminal of the third switch and one terminal of the seventh resistor separately. The second switch and the third switch are configured to: be turned on in response to a control signal that is output by the signal output pin of the microcontroller unit to the second switch, so as to connect the power supply to the output terminal.

The second switching unit reliably converts the control signal, which is output by the microcontroller unit, into the second addressing signal. The two-stage switch design employed by the second switching unit offers superior switching characteristics, drive capability, and transient response capability, thereby effectively suppressing glitches and oscillations during signal switching. Furthermore, the second switching unit further provides a current limiting and protection function, thereby ensuring both a high drive capability and reliable circuit operation.

According to a second aspect, an embodiment of this application provides a battery management unit. The battery management unit includes: a substrate; and the communication device disclosed above. The communication device is disposed on the substrate.

According to a third aspect, an embodiment of this application provides a battery module. The battery module includes: a cell module; and the battery management unit disclosed above. The battery management unit is connected to the cell module.

The beneficial effects of the related devices provided in the second aspect and the third aspect of this application may be learned by referencing the beneficial effects of the technical solution of the first aspect, and will not be repeated here.

According to a fourth aspect, an embodiment of this application provides a battery cluster. The battery cluster includes: a battery control unit; at least two battery modules disclosed above; and a communication harness. Connectors between battery management units of two adjacent battery modules are connected by the communication harness. A connector of a battery management unit of one of the battery modules is connected to the battery control unit by the communication harness.

In the above battery cluster, the restriction on the fixed interface connection relationship of different battery management units is removed, thereby effectively reducing the wiring difficulty of the communication harness and facilitating the assembling and mounting of the battery cluster.

With reference to the fourth aspect, in a possible implementation, the battery management unit of the battery module includes: a first connector and a second connector. The battery cluster includes at least two daisy-chain connection groups. Each of the daisy-chain connection groups includes at least one battery module. Between two adjacent daisy-chain connection groups, the first connector of the battery management unit in one daisy-chain connection group is connected to the first connector of the battery management unit in the other daisy-chain connection group by the communication harness; or the second connector of the battery management unit in one daisy-chain connection group is connected to the second connector of the battery management unit in the other daisy-chain connection group by the communication harness.

With reference to the fourth aspect or any one of the above possible implementations of the fourth aspect, in another possible implementation, the at least two daisy-chain connection groups include a first daisy-chain connection group. The first daisy-chain connection group is connected to the battery control unit. The first daisy-chain connection group includes at least two battery modules. In the first daisy-chain connection group, the first connector of one battery management unit is connected to the second connector of an adjacent battery management unit by the communication harness.

The connector arrangement in the above battery cluster enables a simpler connection scheme to be selected between adjacent daisy-chain connection groups based on the actual mounting position, thereby improving the flexibility and adaptability of wiring and effectively shortening the length of the communication harness and the wiring difficulty.

### BRIEF DESCRIPTION OF DRAWINGS

One or more embodiments are described illustratively with reference to corresponding drawings. The illustrative description does not constitute any limitation on the embodiments. Components marked with the same reference numeral in the drawings represent similar components. Unless otherwise expressly specified, the drawings are not drawn to scale.
FIG. 1 is a schematic diagram of a typical battery management system;
FIG. 2 is a schematic diagram of a battery management system according to an embodiment of this application;
FIG. 3 is a schematic diagram of connection of three battery management units according to an embodiment of this application;
FIG. 4 is a schematic diagram of connection of three battery management units in the case that a signal blocking unit is disposed according to an embodiment of this application;
FIG. 5 is a schematic diagram of a communication device according to an embodiment of this application;
FIG. 6 is a schematic diagram of two communication devices connected by a communication harness according to an embodiment of this application;
FIG. 7 is a schematic diagram of a communication device in the case that a unidirectional conducting element is disposed according to an embodiment of this application;
FIG. 8 is a schematic circuit diagram of a first switching unit according to an embodiment of this application;
FIG. 9 is a schematic circuit diagram of a second switching unit according to an embodiment of this application;
FIG. 10 is a schematic diagram of a battery management unit according to an embodiment of this application;
FIG. 11 is a schematic diagram of a battery module according to an embodiment of this application;
FIG. 12 is a schematic diagram of a battery cluster according to an embodiment of this application; and
FIG. 13 is a schematic diagram of a battery cluster in the case that the battery cluster includes a first daisy-chain connection group and a second daisy-chain connection group according to an embodiment of this application.

### DETAILED DESCRIPTION

For ease of understanding this application, the following describes this application in more detail with reference to drawings and specific embodiments.

It is noted that a component referred to as being "disposed on" another component may be disposed on the other component directly or through an intermediate component. A component considered to be "connected to" another component may be connected to the other component directly or through an intermediate component, or may mean that the two components interact with each other through signals. A component considered to be "coupled to" another component may be coupled to the other component directly or through an intermediate component, or may mean that the two components interact with each other through signals.

Unless otherwise defined, all technical and scientific terms used herein bear the same meanings as what is normally understood by a person skilled in the technical field of this application. The terms used in the specification of this application are merely intended to describe specific embodiments but not to limit this application.

A battery management unit (BMU) is a dedicated management device for cell modules, and is configured to collect data such as voltage and temperature of a cell module to perform real-time monitoring on the cell module.

A battery control unit (BCU) is a control unit for an entire battery management system. The BCU exchanges data with each battery management unit to implement global control, safety supervision, and strategy management on a plurality of cell modules.

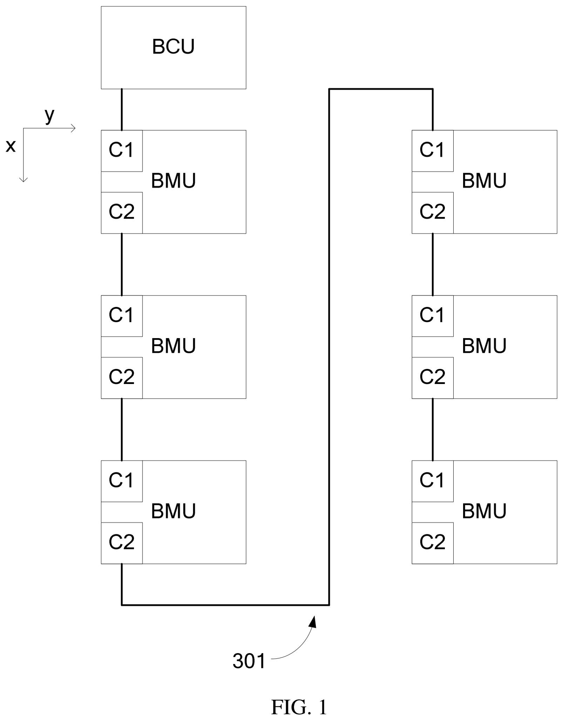

FIG. 1 is a schematic diagram of layout of a typical battery management system. As shown in FIG. 1, a plurality of BMUs are divided into a plurality of groups. Each group of BMUs are arranged sequentially along a direction x shown in FIG. 1. Two adjacent BMU groups are spaced apart along a direction y shown in FIG. 1.

Each BMU includes an upstream connector C1 for receiving an addressing signal and a downstream connector C2 for sending an addressing signal.

As shown in FIG. 1, communication between a plurality of BMUs needs to be established strictly in sequence, such that the downstream connector C2 of one BMU is connected to the upstream connector C1 of another BMU, thereby forming a complete cascade connection. Among a plurality of cascaded BMUs, the upstream connector C1 of a first BMU is connected to a communication interface of the BCU.

During the sequential addressing, after receiving an initial addressing signal, the first BMU performs addressing, for example, assigns itself address 1, and then transmits the addressing signal to a next BMU through the downstream connector C2 of the first BMU so that the next BMU completes addressing. In this way, by transmitting the addressing signal among a plurality of cascaded BMUs one after another, the BMUs are addressed sequentially, forming their own independent address identifiers.

Among the plurality of cascaded BMUs, it is strictly required that the downstream connector C2 of one BMU is connected to the upstream connector C1 of an adjacent BMU (hereinafter referred to as a fixed interface connection manner).

Due to the limited positional arrangement of the BMUs, such a fixed interface connection manner results in a significant increase in the length of communication harnesses required between some BMUs (for example, the communication harness 301 in FIG. 1).

In addition, such a fixed interface connection manner also requires appropriate differentiation and foolproofing design for the interfaces of the upstream connector C1 and the downstream connector C2, so as to avoid wrong plugging during assembling.

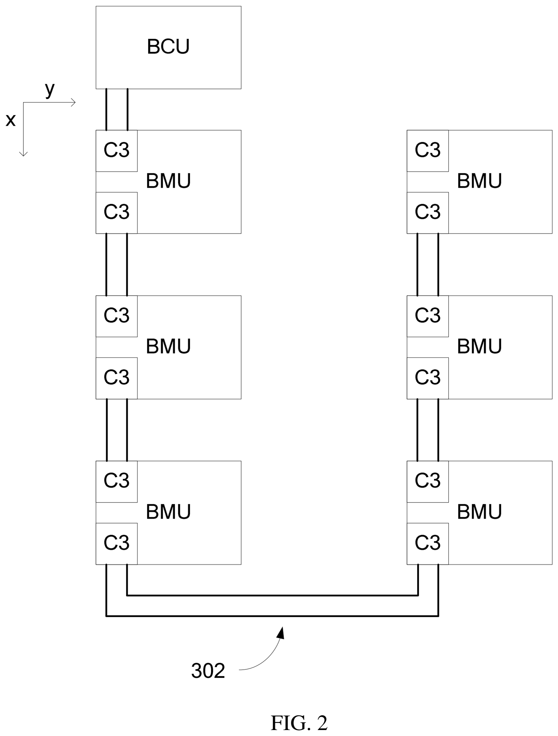

To overcome the limitation of the fixed interface connection manner, the applicant hereof, through research and design, has modified the upstream connector C1 and the downstream connector C2 into universal connectors of the same type. This universal connector C3 is capable of both receiving and transmitting addressing signals, and serves as both an upstream connector C1 and a downstream connector C2. For example, as shown in FIG. 2, each BMU is configured with two universal connectors C3.

By configuring each BMU with the universal connector C3, this application overcomes the limitation of the fixed interface connection manner, thereby effectively simplifying the design of the communication harness and providing higher flexibility. For example, as shown in FIG. 2, when a plurality of BMUs are arranged in the same position layout as in FIG. 1, it is avoided that a very long communication harness 301 in FIG. 1 has to be used. Instead, a shorter communication harness 302 is used to implement a cascade connection between two BMUs spaced apart along the direction y. Furthermore, the use of the universal connector C3 avoids the problem of wrong plugging, and facilitates assembling.

During the implementation of this application, the applicant finds that, in the case that each BMU is configured with a universal connector C3, because the universal connector C3 serves both the function of receiving and the function of outputting an addressing signal, when a plurality of BMUs are cascaded by a communication harness, the addressing signal is provided to all odd-numbered BMUs. In this way, each odd-numbered BMU assigns itself address "1" while each even-numbered BMU assigns itself address "2". Consequently, the addressing operation fails, and the BCU is unable to distinguish between different BMUs.

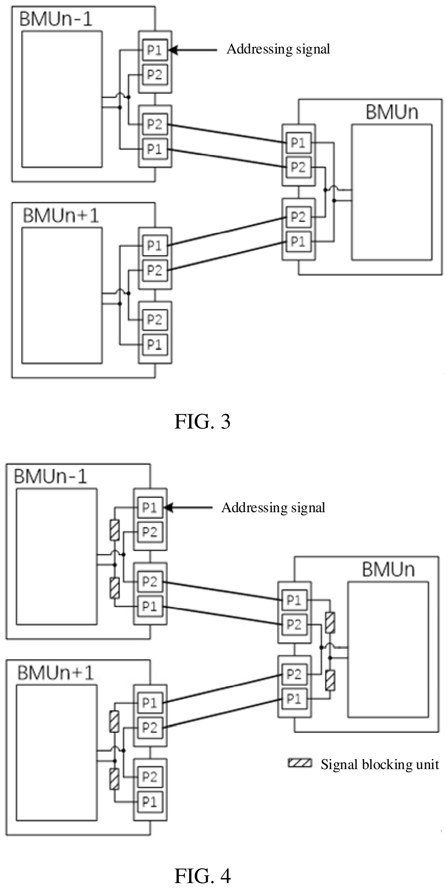

The reason why the addressing signal is provided to the BMUs that are all odd-numbered is described below using three battery management units BMUn-1, BMUn, and BMUn+1 in FIG. 3 as an example. As shown in FIG. 3, the universal connector C3 includes both an input terminal P1 for receiving addressing signals and an output terminal P2 for outputting addressing signals.

When an addressing signal is provided to the battery management unit BMUn-1 through the input terminal P1 of one of the universal connectors C3 of the BMUn-1, the addressing signal is also transmitted to the output terminal P2 of the battery management unit BMUn through the input terminal P1 of another universal connector C3, and also transmitted to the input terminal P1 of the battery management unit BMUn+1 through the output terminal P2 of the BMUn. In this way, the addressing signal is provided to the battery management unit BMUn-1 and the battery management unit BMUn+1 at the same time.

The reason why the signal blocking unit ensures that the addressing signal is transmitted sequentially between the cascaded BMUs using three battery management units BMUn-1, BMUn, and BMUn+1 in FIG. 4 as an example.

By placing a signal blocking unit between the two input terminals P1, the transmission of electrical signals between the two input terminals P1 is restricted, thereby ensuring successful completion of sequential addressing. As shown in FIG. 4, when a signal blocking unit is placed between the two input terminals P1, the addressing signal is prevented from passing directly from the other input terminal P1 to the input terminal P2 of a next battery management unit BMUn. This allows the addressing signal to be transmitted sequentially among the cascaded BMUs, without being directly transmitted to all odd-numbered battery management units BMUn-1 and BMUn+1.

An embodiment of this application provides a communication device. The communication device is designed based on the above inventive concept and is applied to a battery management unit BMU. Without distinguishing between connector types, the communication device ensures successful completion of sequential addressing of a plurality of cascaded BMUs, thereby reducing the wiring difficulty of the communication harness and facilitating the assembling and mounting of the overall battery management system.

Understandably, based on the same design concept, the communication device is further applied to other different types of electronic devices, so that these electronic devices can implement cascade connection and sequential addressing conveniently, thereby achieving the technical effects of reducing the wiring difficulty of the communication harness and facilitating assembling.

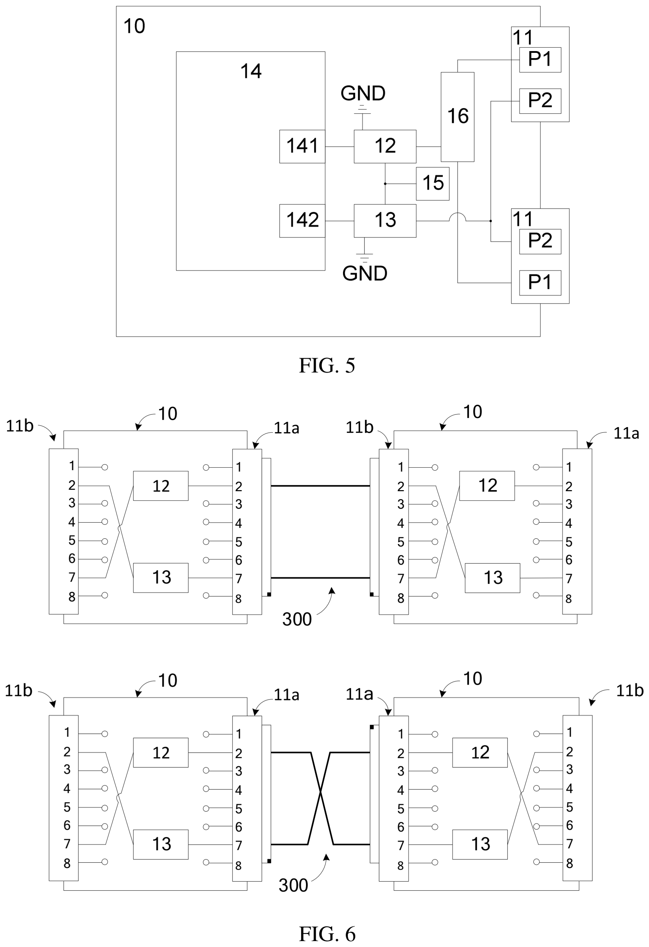

FIG. 5 is a schematic diagram of a communication device according to an embodiment of this application. As shown in FIG. 5, the communication device 10 includes: two connectors 11, a first switching unit 12, a second switching unit 13, a microcontroller unit 14, a power supply 15, and a signal blocking unit 16.

Each connector 11 includes an input terminal P1 configured to receive a first addressing signal and an output terminal P2 configured to output a second addressing signal. In other words, each connector 11 is configured to both receive a first addressing signal and transmit a second addressing signal. The two connectors 11 are of the same type, without differentiating between the connector types.

In this application, a "first addressing signal" means an electrical signal received by a communication device and indicating a need to perform addressing. A "second addressing signal" means an electrical signal sent to an external device by a communication device after completion of addressing, so as to instruct a next communication device to perform addressing. The specific form of the addressing signal is not limited herein.

The first switching unit 12 is a functional circuit connected to the input terminal P1. Both input terminals P1 are connected to the first switching unit 12. The unit is referred to as a switching unit because it is mainly formed of one or more controllable switches.

The second switching unit 13 is a functional circuit connected to the output terminal P2. Both output terminals P2 are connected to the second switching unit 13, so that the second addressing signal is provided at the two output terminals P2 at the same time.

The microcontroller unit 14 includes a plurality of different signal pins to implement one or more types of data processing and computing operations.

In this application, the addressing operation is performed by the microcontroller unit 14. The microcontroller unit 14 includes a signal receiving pin 141 and a signal output pin 142 that are related to the addressing operation. The signal receiving pin 141 is connected to the first switching unit 12 to determine whether the first addressing signal is received. The signal output pin 142 is connected to the second switching unit 13 to cause the output terminal P2 to output the second addressing signal.

The power supply 15 is a functional circuit with a preset voltage value. The power supply is connected to the first switching unit 12 and the second switching unit 13 separately to provide the required stable DC voltage for the two switching units.

The signal blocking unit 16 is disposed between the input terminal P1 and the first switching unit 12. The signal blocking unit 16 plays a blocking role to block an electrical signal input at one input terminal P1 from being output at the other input terminal P1.

In practical use, in response to the first addressing signal received by the input terminal P1, the first switching unit 12 is triggered, and connects the signal receiving pin 141 of the microcontroller unit 14 to the ground terminal GND. In this way, the microcontroller unit 14 determines receipt of the first addressing signal based on the level signal change at signal receiving pin 141 and proceeds with addressing. After completing addressing, the microcontroller unit 14 outputs a control signal to the second switching unit 13 at the signal output pin 142. In response to the control signal that is output by the signal output pin 142 of the microcontroller unit 14 to the second switching unit 13, the second switching unit 13 is triggered, and connects the power supply 15 to the output terminal P2, thereby causing the output terminal P2 to generate a level signal change and output a second addressing signal. The second addressing signal is further transmitted through the communication harness to one of the connectors of a next communication device to serve as a first addressing signal that causes the microcontroller unit 14 of the next communication device to continue addressing.

In addition, the signal blocking unit 16 disposed between the input terminal P1 and the first switching unit 12 blocks the transmission of electrical signals between the two input terminals P1. In this way, the first addressing signal received by one of the input terminals P1 is unable to be output through the other input terminal P1, thereby preventing the first addressing signal from being further transmitted to the output terminal P2 of one of the connectors of the next communication device through the communication harness.

In the above communication device, by disposing the input terminal and the output terminal in each connector, this application eliminates the need to distinguish between connector types when connecting two communication devices. The communication harness between the two different communication devices is connected to any connector in the communication device, thereby eliminating the limitation of a fixed interface connection relationship.

Furthermore, the signal blocking unit disposed in the communication device limits the transmission of the electrical signal between two input terminals in the same communication device, thereby ensuring that the addressing signal is transmitted among a plurality of cascaded communication devices one after another in preset order, and successfully completing the sequential addressing operation.

In some embodiments, in order to ensure correct transmission of the first addressing signal and the second addressing signal, the input terminal P1 of one of the connectors is connected to an output terminal P2 of a connector of another communication device by a communication harness 300, and the output terminal P2 of the one connector is connected to an input terminal P1 of the connector of the other communication device by the communication harness.

In other words, when the connectors of two different communication devices are connected by a communication harness, the input terminal P1 of the connector is connected to the output terminal P2 of the other connector instead of being connected to the input terminal P1 of the other connector.

In some embodiments, the two connectors 11 disposed on the same communication device include: a first connector 11a and a second connector 11b.

A position of the input terminal P1 in the first connector 11a corresponds to a position of the output terminal P2 in the second connector 11b, and a position of the output terminal P2 in the first connector 11a corresponds to a position of the input terminal P1 in the second connector 11b.

"Correspondence between two terminals" means that one terminal is arranged in the same position or order in one connector as the other terminal in the other connector. The following is a detailed description using the first connector 11a and the second connector 11b shown in FIG. 6 as an example.

As shown in FIG. 6, for each communication device 10, the first connector 11a disposed on the communication device 10 includes 8 terminals arranged in sequence, of which the 2^{nd} terminal is an input terminal P1 and is connected to the first switching unit 12, and the 7^{th} terminal is an output terminal P2 and is connected to the second switching unit 13. The second connector 11b disposed on the communication device 10 includes 8 terminals arranged in sequence, of which the 7^{th} terminal is the input terminal P1 and is connected to the first switching unit 12, and the 2^{nd} terminal is and output terminal P2 and is connected to the second switching unit 13.

In this way, in the case of using the communication harness 300 to connect the two communication devices 10, when the two ends of the communication harness 300 are connected to the first connector 11a of one of the communication devices 10 and the second connector 11b of the other communication device, the interface of the communication harness 300 ensures, by forward plugging, that the input terminal P1 of one of the communication devices is connected to the output terminal P2 of the other communication device.

Still referring to FIG. 6, in the case that both ends of the communication harness 300 are connected to the first connector 11a (or the second connector 11b), the interface of the communication harness 300 employs a reverse plugging manner, and ensures, by twisting the harness, that the input terminal P1 of one communication device is connected to the output terminal P2 of the other communication device.

Specifically, a plurality of different methods are used as appropriate to guide the communication harness to be plugged in the correct direction. For example, an appropriate foolproofing structure is disposed at the interface of one of the connectors, or the length of the communication harness is adjusted and set.

Alternatively, the connectors on each communication device employ exactly the same terminal arrangement order. For example, both connectors on each communication device are the first connector (or the second connector). This ensures that both ends of the communication harness 300 are connected to the first connector 11a (or the second connector 11b) in any two communication devices. In this case, a suitable structure is disposed to guide the connectors of the communication harness 300 to be plugged reversely, and the harness is twisted to ensure that the input terminal P1 of one communication device is connected to the output terminal P2 of the other communication device.

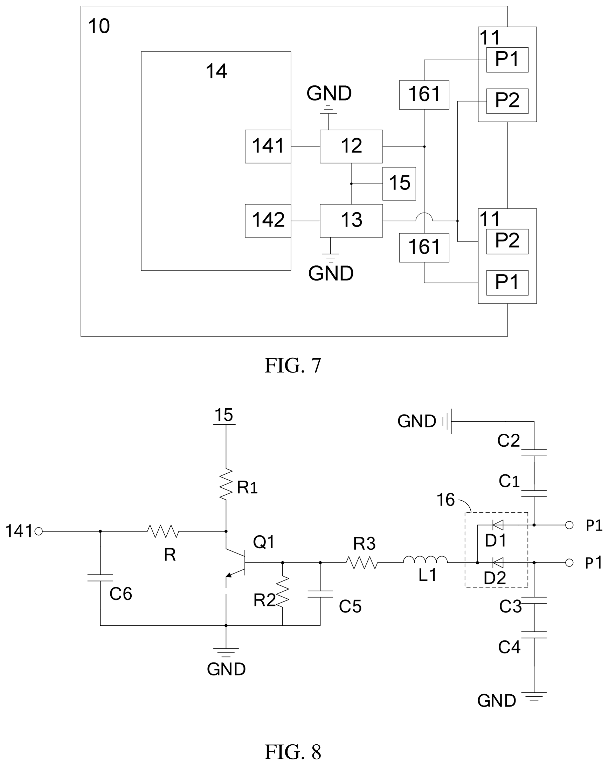

In some embodiments, as shown in FIG. 7, the signal blocking unit 16 includes a unidirectional conducting element 161.

One end of the unidirectional conducting element 161 is connected to the input terminal P1, and another end of the unidirectional conducting element 161 is connected to the first switching unit 12, so that the electrical signal can only be transmitted unidirectionally from the input terminal P1 to the first switching unit 12.

In this way, by disposing a corresponding unidirectional conducting element 161 between each input terminal P1 and the first switching unit 12, the desired signal blocking function of the signal blocking unit 16 is achieved. When one of the input terminals P1 receives a first addressing signal, the first addressing signal is transmitted to the first switching unit 12, but not to the other input terminal P1.

In this way, the signal blocking unit implemented in the form of a unidirectional conducting element is simple in structure and highly reliable, thereby improving stability and safety of the communication device.

Specifically, the unidirectional conducting element 161 is an electronic element that allows an electrical signal to flow in a specified direction and blocks the electronic signal in the opposite direction, and includes a diode, a transistor, or an optocoupler. Understandably, a person skilled in the art may select and use an appropriate unidirectional conducting element as appropriate.

In some embodiments, as shown in FIG. 8, the first switching unit 12 includes a first resistor R1, a second resistor R2, a third resistor R3, and a first switch Q1.

One terminal of the first resistor R1 is connected to the power supply 15, and another terminal of the first resistor R1 is connected to a first terminal of the first switch Q1. One terminal of the second resistor R2 is connected to a second terminal of the first switch Q1, and another terminal of the second resistor R2 is connected to a control terminal of the first switch Q1.

One terminal of the third resistor R3 is connected to the input terminal P1 by the signal blocking unit 16, and another terminal of the third resistor R3 is connected to the control terminal of the first switch Q1. The first terminal of the first switch Q1 is further connected to the signal receiving pin 141 of the microcontroller unit 14, and the second terminal of the first switch Q1 is further connected to the ground terminal GND.

In actual use, the first addressing signal received by the input terminal P1 passes through the third resistor R3 and is provided to the control terminal of the first switch Q1, thereby turning on the first switch Q1. When the first switch Q1 is turned on, an electrical connection is created between the first terminal and the second terminal of first switch Q1. The signal receiving pin 141 of the microcontroller unit is then connected to the ground terminal GND, thereby stepping down the level at signal receiving pin 141, and causing the microcontroller unit 14 to determine receipt of the first addressing signal and start performing an addressing operation.

When the input terminal P1 does not receive the first addressing signal, the first switch Q1 remains in an off state, and the path between the first terminal and the second terminal of the first switch Q1 is cut off. The signal receiving pin 141 of the microcontroller unit is connected to the power supply 15 by the first resistor R1, and remains in a high-level state.

Specifically, the first switch Q1 is implemented by a suitable type of electronic device selected as appropriate. As an example, FIG. 8 shows the first switch Q1 implemented by a transistor.

As shown in FIG. 8, the base of the transistor serves as a control terminal of the first switch Q1, and the collector and the emitter of the transistor serve as the first terminal and the second terminal of the first switch Q1 respectively. The second resistor R2 coordinates with the transistor to provide a suitable bias for the transistor, helping to control the turn-on characteristics and switching speed of the transistor.

The first switching unit converts an external first addressing signal into a low-level signal for detecting safety of the microcontroller unit, and provides overvoltage protection, thereby effectively reducing the risk of damage to the microcontroller unit caused by the first addressing signal. Furthermore, the first switching unit is further characterized by fast response and low power consumption, thereby improving the real-time feature and reliability of the addressing signal detection.

In other embodiments, in order to further improve the operating performance and reliability of the first switching unit, still referring to FIG. 8, the first switching unit 12 further includes: a resistor R, a first capacitor C1, a second capacitor C2, a third capacitor C3, a fourth capacitor C4, a fifth capacitor C5, a sixth capacitor C6 and a first inductor L1.

One terminal of the first capacitor C1 is connected to one terminal of the second capacitor C2, another terminal of the first capacitor C1 is connected to one of the input terminals P1, and another terminal of the second capacitor C2 is connected to the ground terminal GND.

One terminal of the third capacitor C3 is connected to one terminal of the fourth capacitor C4, another terminal of the third capacitor C3 is connected to the other input terminal P1, and another terminal of the fourth capacitor C4 is connected to the ground terminal GND.

One terminal of the first inductor L1 is connected to the signal blocking unit 16. Another terminal of the first inductor L1 is connected to the third resistor R3.

One terminal of the fifth capacitor C5 is connected to the control terminal of the first switch Q1, and the other terminal of the fifth capacitor C5 is connected to the second terminal of the first switch Q1. One terminal of the sixth capacitor C6 is connected to the signal receiving pin 141, and another terminal of the sixth capacitor C6 is connected to the ground terminal GND. The first terminal of the first switch Q1 is further connected to the signal receiving pin 141 of the microcontroller unit 14 through the resistance R.

As an example, FIG. 8 shows a signal blocking unit 16 formed of a first diode D1 and a second diode D2. The cathode of the first diode D1 is connected to the cathode of the second diode D2 to form an output terminal of the signal blocking unit 16. The anode of the first diode D1 and the anode of the second diode D2 each are respectively connected to two input terminals P1.

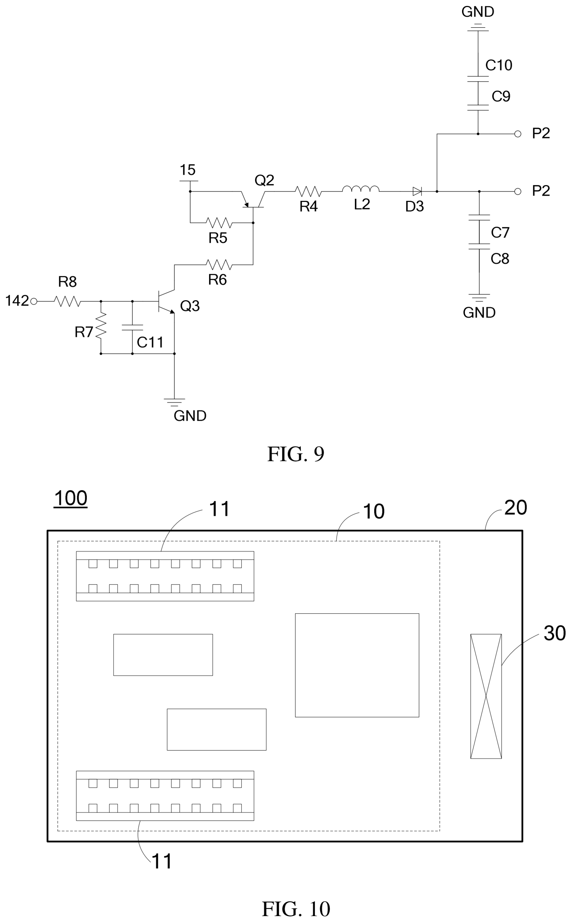

In some embodiments, as shown in FIG. 9, the second switching unit 13 includes: a fourth resistor R4, a fifth resistor R5, a sixth resistor R6, a seventh resistor R7, an eighth resistor R8, a second switch Q2, and a third switch Q3.

One terminal of the fourth resistor R4 is connected to the output terminal P2, and another terminal of the fourth resistor R4 is connected to a first terminal of the second switch Q2. One terminal of the fifth resistor R5 is connected to a second terminal of the second switch Q2 and the power supply 15 separately, and another terminal of the fifth resistor R5 is connected to a control terminal of the second switch Q2. The second terminal of the second switch Q2 is connected to the power supply 15.

One terminal of the sixth resistor R6 is connected to the control terminal of the second switch Q2, and another terminal of the sixth resistor R6 is connected to a first terminal of the third switch Q3. One terminal of the seventh resistor R7 is connected to a control terminal of the third switch Q3, and another terminal of the seventh resistor R7 is connected to a second terminal of the third switch Q3. The second terminal of the third switch Q3 is connected to the ground terminal GND.

One terminal of the eighth resistor R8 is connected to the signal output pin 142 of the microcontroller unit, and another terminal of the eighth resistor R8 is connected to the control terminal of the third switch Q3 and one terminal of the seventh resistor R7 separately.

In actual use, a control signal output by the signal output pin 142 of the microcontroller unit is provided to the control terminal of the third switch Q3 through the eighth resistor R8, thereby turning on the third switch Q3. When the third switch Q3 is turned on, the control terminal of the second switch Q2 is connected to the ground terminal by the sixth resistor R6, thereby stepping down the level of the control terminal of the second switch Q2, and also turning on the second switch Q2.

When the second switch Q2 is turned on, an electrical connection is created between the first terminal and the second terminal of the second switch Q2. The power supply 15 is connected to the output terminal P2 by the fourth resistor R4, thereby stepping up the level of the output terminal P2, and forming a second addressing signal.

When the signal output pin 142 does not output a control signal, the control terminal and the second terminal of the third switch Q3 are at substantially the same voltage level, so that the third switch Q3 is in an off state. When the third switch Q3 is in the off state, the control terminal of the second switch Q2 is connected to the power supply 15 by the fifth resistor R5. The control terminal and the second terminal of the second switch Q2 are also at substantially the same voltage level, so that the second switch Q2 is in an off state. In this case, the output terminal P2 does not output the second addressing signal.

Specifically, the second switch Q2 and the third switch Q3 are implemented by a suitable type of electronic device selected as appropriate. As an example, FIG. 9 shows a second switch Q2 and a third switch Q3 implemented by two transistors respectively.

The base of one of the transistors serves as a control terminal of the second switch Q2, and the collector and the emitter of the transistor serve as the first terminal and the second terminal of the second switch Q2 respectively. The fifth resistor R5 coordinates with this transistor to provide a suitable bias for the transistor, helping to control the turn-on characteristics and switching speed of the transistor.

The base of the other transistor serves as a control terminal of the third switch Q3, and the collector and the emitter of the transistor serve as the first terminal and the second terminal of the third switch Q3 respectively. The seventh resistor R7 coordinates with this transistor to provide a suitable bias for the transistor, helping to control the turn-on characteristics and switching speed of the transistor.

The two-stage switching arrangement used in the above second switching unit provides strong driving capability, enables the conversion of the control signal output by the microcontroller unit into the second addressing signal, and ensures that a reliable process of sequential addressing in the communication device.

In other embodiments, in order to further improve the operating performance and reliability of the second switching unit, still referring to FIG. 9, the second switching unit further includes: a seventh capacitor C7, an eighth capacitor C8, a ninth capacitor C9, a tenth capacitor C10, an eleventh capacitor C11, a third diode D3, and a second inductor L2.

One terminal of the seventh capacitor C7 is connected to one terminal of the eighth capacitor C8, another terminal of the seventh capacitor C7 is connected to one of the output terminals P2, and another terminal of the eighth capacitor C8 is connected to the ground terminal GND.

One terminal of the ninth capacitor C9 is connected to one terminal of the tenth capacitor C10, another terminal of the ninth capacitor C9 is connected to the other output terminal P2, and another terminal of the tenth capacitor C10 is connected to the ground terminal GND.

The anode of the third diode D3 is connected to the second inductor L2, and the cathode of the third diode D3 is connected to the two output terminals P2. The third diode D3 serves as a unidirectional conducting element, and causes an electrical signal to flow only from the second inductor L2 to the output terminal P2, but not to flow from the output terminal P2 back to the second inductor L2.

Another terminal of the second inductor L2 is connected to the fourth resistor R4. One terminal of the eleventh capacitor C11 is connected to the control terminal of the third switch Q3, and another terminal of the eleventh capacitor C11 is connected to the second terminal of the third switch Q3.

The electronic devices added in the second switching unit effectively suppress glitches and oscillations during signal switching, and also provide sufficient current limitation and protection functions, thereby improving the reliability of the second switching unit.

Based on the communication device provided in the above embodiment, an embodiment of this application further provides a battery management unit. FIG. 10 is a schematic diagram of a battery management unit according to an embodiment of this application. As shown in FIG. 10, the battery management unit 100 includes: a communication device 10 and a substrate 20.

The communication device 10 is disposed on the substrate 20 and supported by the substrate 20. The communication device 10 includes two connectors 11 located at preset positions on the substrate 20 respectively.

Understandably, in order to meet the application requirements of the battery management unit, the substrate 20 is further populated with other functional circuits or modules. For example, as shown in FIG. 10, the substrate 20 is further populated with a battery sampling terminal 30. The battery sampling terminal 30 is an interface that is communicatively connected to a corresponding cell module to collect one or more parameters (for example, voltage and temperature) in the cell module.

As an example, FIG. 10 shows a roughly rectangular substrate 20. Two connectors 11 are symmetrically disposed along a length direction of the rectangle at a position close to the two long sides of the rectangle and close to one of the wide sides of the rectangular substrate 2. The battery sampling terminal 30 is disposed at a position close to the other wide side of the rectangular substrate 20.

Specifically, the specific shape and size of the substrate 20, and the specific positions of the connector 11 and the battery sampling terminal 30, are adjusted as appropriate.

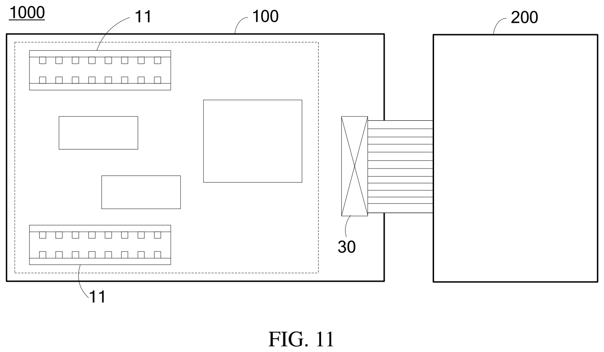

Based on the battery management unit provided in the above embodiment, an embodiment of this application further provides a battery module to which the battery management unit is applied. FIG. 11 is a schematic diagram of a battery module according to an embodiment of this application. As shown in FIG. 11, the battery module 1000 includes a battery management unit 100 and a corresponding cell module 200.

The cell module 200 includes one or more battery cells connected in series and/or parallel to form an energy storage unit that stores a specific amount of electrical energy in the form of chemical energy. The battery management unit 100 is electrically connected to the cell module 200 to obtain and collect one or more parameters of the cell module 200 and monitor the operating status of the cell module 200.

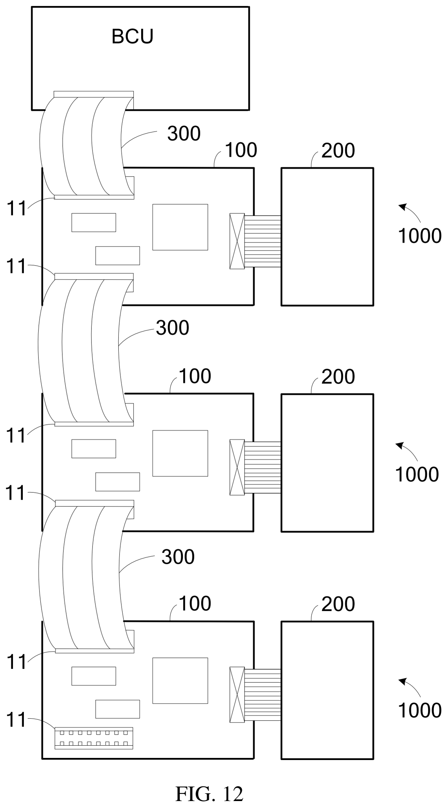

Based on the battery module provided in the above embodiment, an embodiment of this application further provides a battery cluster to which the battery module is applied. FIG. 12 is a schematic diagram of a battery cluster according to an embodiment of this application.

As shown in FIG. 12, the battery cluster includes a battery control unit BCU, at least two battery modules 1000, and a communication harness 300.

The connectors 11 of the battery management units 100 of two adjacent battery modules 1000 are connected by the communication harness 300, and the connector 11 of the battery management unit 100 of one of the battery modules 1000 is connected to the BCU by the communication harness 300, so that a complete battery management system is formed between all the battery management units 100 and the BCU to control the cell module 200 in each battery module.

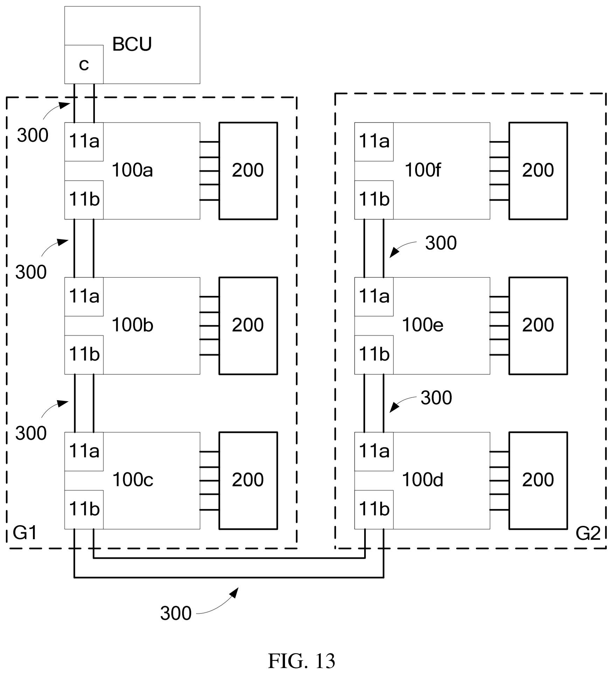

In some embodiments, as shown in FIG. 13, the battery management unit 100 of the battery module employs the connector configuration described in the above embodiment, including a first connector 11a and a second connector 11b.

Accordingly, depending on the connection manner of the connectors in use, the battery cluster includes at least two daisy-chain connection groups. Each of the daisy-chain connection groups includes at least one battery module. Between two adjacent daisy-chain connection groups, the connector of the battery management unit in one daisy-chain connection group is connected to a connector by the communication harness 300, the connector being of the same type as the connector of the battery management unit in the other daisy-chain connection group.

In other words, between two adjacent daisy-chain connection groups, the first connector 11a of the battery management unit in one daisy-chain connection group is connected to the first connector 11a of the battery management unit in the other daisy-chain connection group by the communication harness 300; or, the second connector 11b of the battery management unit in one daisy-chain connection group is connected to the second connector 11b of the battery management unit in the other daisy-chain connection group by the communication harness 300.

In some embodiments, the at least two daisy-chain connection groups further include a first daisy-chain connection group. The first daisy-chain connection group is a daisy-chain connection group connected to the BCU.

The first daisy-chain connection group includes at least two battery modules. In the first daisy-chain connection group, the first connector 11a of one battery management unit is connected to the second connector 11b of an adjacent battery management unit by the communication harness.

Specifically, in some circumstances, this daisy-chain connection group may include only one battery module. In other words, the battery cluster includes one first daisy-chain connection group and other different daisy-chain connection groups. These daisy-chain connection groups include any number of battery modules. Different daisy-chain connection groups each include the same or different numbers of battery modules.

The following describes in detail the connection manner of the daisy-chain connection groups by using the battery cluster shown in FIG. 13 as an example. As an example, FIG. 13 shows a circumstance in which the battery cluster includes a first daisy-chain connection group G1 and a second daisy-chain connection group G2.

The first daisy-chain connection group G1 and the second daisy-chain connection group G2 each include three battery modules. Within the first daisy-chain connection group G1, the battery management units of the three battery modules are assigned reference signs 100a, 100b, and 100c, respectively. Within the second daisy-chain connection group G2, the battery management units of the three battery modules are assigned reference signs 100d, 100e, and 100f, respectively.

As shown in FIG. 13, in the first daisy-chain connection group G1, the first connector 11a of the battery management unit 100a is connected to the communication interface C of the BCU by the communication harness 300. The second connector 11b of the battery management unit 100a is connected to the first connector 11a of the battery management unit 100b by the communication harness 300. The second connector 11b of the battery management unit 100b is connected to the first connector 11a of the battery management unit 100c by the communication harness 300.

In the second daisy-chain connection group G2, the second connector 11b of the battery management unit 100d is connected to the second connector 11b of the battery management unit 100c in the first daisy-chain connection group G1 by the communication harness 300. The first connector 11a of the battery management unit 100d is connected to the second connector 11b of the battery management unit 100e by the communication harness 300. The first connector 11a of the battery management unit 100e is connected to the second connector 11b of the battery management unit 100f by the communication harness 300.

In this way, the cascade connection between all battery management units is completed. Based on the initial addressing signal provided by the communication interface C of the BCU, the six battery management units can complete the sequential addressing in sequence.

In such a battery cluster, the restriction on the fixed connection relationship of the connectors of different battery management units is removed, thereby effectively reducing the wiring difficulty of the communication harness and facilitating the assembling and mounting of the battery cluster.

The foregoing embodiments are merely intended to describe the technical solutions of this application but not to limit this application. Based on the concept of this application, the technical features in the foregoing embodiments or different embodiments may be combined, the steps may be implemented in any order, and many variations may be made to this application in different aspects, which, for brevity, are not provided in detail. Although this application has been described in detail with reference to the foregoing embodiments, a person of ordinary skill in the art understands that modifications may still be made to the technical solutions described in the foregoing embodiments, or equivalent replacements may still be made to some technical features in the technical solutions. Such modifications and replacements do not make the essence of the corresponding technical solutions depart from the scope of the technical solutions of the embodiments of this application.

## Claims

1. A communication device (10), **characterized in that** the communication device (10) comprises:
two connectors (11), wherein each connector (11) comprises: an input terminal (P1) configured to receive a first addressing signal and an output terminal (P2) configured to output a second addressing signal;
a first switching unit (12), connected to the input terminal (P1);
a second switching unit (13), connected to the output terminal (P2);
a microcontroller unit (14), wherein a signal receiving pin (141) of the microcontroller unit (14) is connected to the first switching unit (12), and a signal output pin (142) of the microcontroller unit (14) is connected to the second switching unit (13);
a power supply (15), connected to the first switching unit (12) and the second switching unit (13) separately; and
a signal blocking unit (16), disposed between the input terminal (P1) and the first switching unit (12);
wherein, the first switching unit (12) is configured to connect the signal receiving pin (141) of the microcontroller unit (14) to a ground terminal (GND) in response to the first addressing signal received by the input terminal (P1);
the second switching unit (13) is configured to connect the power supply (15) to the output terminal (P2) in response to a control signal, wherein the control signal is output by the signal output pin (142) of the microcontroller unit (14) to the second switching unit (13); and
the signal blocking unit (16) is configured to block transmission of an electrical signal between the input terminals (P1) of the two connectors (11).

2. The communication device (10) according to claim 1, **characterized in that** the input terminal (P1) of one of the two connectors (11) is connected to an output terminal (P2) of a connector (11) of another communication device (10) by a communication harness (300), and
the output terminal (P2) of the one connector(11) is connected to an input terminal (P1) of the connector (11) of the other communication device (10) by the communication harness (300).

3. The communication device (10) according to claim 1 or 2, **characterized in that** the two connectors (11) comprise: a first connector (11a) and a second connector (11b);
a position of the input terminal (P1) in the first connector (11a) corresponds to a position of the output terminal (P2) in the second connector (11b); and
a position of the output terminal (P2) in the first connector (11a) corresponds to a position of the input terminal (P1) in the second connector (11b).

4. The communication device (10) according to any one of claims 1 to 3, **characterized in that** the signal blocking unit (16) comprises a unidirectional conducting element (161);
one end of the unidirectional conducting element (161) is connected to the input terminal (P1), and another end of the unidirectional conducting element (161) is connected to the first switching unit (12);
the unidirectional conducting element (161) is configured to control the electrical signal to be unidirectionally transmitted from the input terminal (P1) to the first switching unit (12); and
preferably, the unidirectional conducting element (161) comprises a diode, a transistor, or an optocoupler.

5. The communication device (10) according to claim 4, **characterized in that** the two connectors (11) comprise a first connector (11a) and a second connector (11b); the signal blocking unit (16) comprises a first unidirectional conducting element and a second unidirectional conducting element;
one end of the first unidirectional conducting element is connected to the input terminal (P1) of the first connector (11a), another end of the first unidirectional conducting element is connected to the first switching unit (12),
one end of the second unidirectional conducting element is connected to the input terminal (P1) of the second connector (11b), another end of the second unidirectional conducting element is connected to the first switching unit (12).

6. The communication device (10) according to any one of claims 1 to 5, **characterized in that** the first switching unit (12) comprises a first resistor (R1), a second resistor (R2), a third resistor (R3), and a first switch (Q1);
one terminal of the first resistor (R1) is connected to the power supply (15), and another terminal of the first resistor (R1) is connected to a first terminal of the first switch (Q1);
one terminal of the second resistor (R2) is connected to a second terminal of the first switch (Q1), and another terminal of the second resistor (R2) is connected to a control terminal of the first switch (Q1);
one terminal of the third resistor (R3) is connected to the input terminal (P1) by the signal blocking unit (16), and another terminal of the third resistor (R3) is connected to the control terminal of the first switch (Q1);
the first terminal of the first switch (Q1) is further connected to the signal receiving pin (141) of the microcontroller unit (14), and the second terminal of the first switch (Q1) is further connected to the ground terminal (GND); and
the first switch (Q1) is configured to be turned on in response to the first addressing signal received by the input terminal (P1), so as to connect the signal receiving pin (141) of the microcontroller unit (14) to the ground terminal (GND).

7. The communication device (10) according to claim 6, **characterized in that** the first switching unit (12) comprises a resistor (R);
the first terminal of the first switch (Q1) is connected to one end of the resistor (R), another end of the resistor (R) is connected to the signal receiving pin (141) of the microcontroller unit (14).

8. The communication device (10) according to any one of claims 1 to 7, **characterized in that** the second switching (13) unit comprises a fourth resistor (R4), a fifth resistor (R5), a sixth resistor (R6), a seventh resistor (R7), an eighth resistor (R8), a second switch (Q2), and a third switch (Q3);
one terminal of the fourth resistor (R4) is connected to the output terminal (P2), and another terminal of the fourth resistor (R4) is connected to a first terminal of the second switch (Q2);
one terminal of the fifth resistor (R5) is connected to a second terminal of the second switch (Q2) and the power supply (15) separately, and another terminal of the fifth resistor (R5) is connected to a control terminal of the second switch (Q2);
the second terminal of the second switch (Q2) is connected to the power supply (15);
one terminal of the sixth resistor (R6) is connected to the control terminal of the second switch (Q2), and another terminal of the sixth resistor (R6) is connected to a first terminal of the third switch (Q3);
one terminal of the seventh resistor (R7) is connected to a control terminal of the third switch (Q3), and another terminal of the seventh resistor (R7) is connected to a second terminal of the third switch (Q3);
the second terminal of the third switch (Q3) is connected to the ground terminal (GND);
one terminal of the eighth resistor (R8) is connected to the signal output pin (142) of the microcontroller unit (14), and another terminal of the eighth resistor (R8) is connected to the control terminal of the third switch (Q3) and one terminal of the seventh resistor (R7) separately; and
the second switch (Q2) and the third switch (Q3) are configured to be turned on in response to a control signal that is output by the signal output pin (142) of the microcontroller unit (14) to the second switch (Q2), so as to connect the power supply (15) to the output terminal (P2).

9. The communication device (10) according to any one of claims 1 to 8, **characterized in that** the first addressing signal is a high-level signal.

10. The communication device (10) according to any one of claims 1 to 9, **characterized in that** the second addressing signal is a high-level signal.

11. A battery management unit (100), **characterized in that** the battery management unit (100) comprises:
a substrate (20); and
the communication device (10) according to any one of claims 1 to 10, wherein the communication device (10) is disposed on the substrate (20).

12. A battery module (1000), **characterized in that** the battery module (1000) comprises:
a cell module (200); and
the battery management unit (100) according to claim 11, wherein the battery management unit (100) is connected to the cell module (200).

13. A battery cluster, **characterized in that** the battery cluster comprises:
a battery control unit;
at least two battery modules (1000), each battery module (1000) being the battery module (1000) according to claim 12; and
a communication harness (300);
wherein, connectors (11) between battery management units (100) of two adjacent battery modules (1000) are connected by the communication harness (300); and
a connector (11) of a battery management unit (100) of one of the battery modules (1000) is connected to the battery control unit by the communication harness (300).

14. The battery cluster according to claim 13, **characterized in that** the battery management unit (100) of the battery module (1000) comprises: a first connector (11a) and a second connector (11b);
the battery cluster comprises at least two daisy-chain connection groups, each of the daisy-chain connection groups comprises at least one battery module (1000);
between two adjacent daisy-chain connection groups, the first connector (11a) of the battery management unit (100) in one daisy-chain connection group is connected to the first connector (11a) of the battery management unit (100) in the other daisy-chain connection group by the communication harness (300); or
the second connector (11b) of the battery management unit (100) in one daisy-chain connection group is connected to the second connector (11b) of the battery management unit (100) in the other daisy-chain connection group by the communication harness (300).

15. The battery cluster according to claim 14, **characterized in that** the at least two daisy-chain connection groups comprise a first daisy-chain connection group (G1), and the first daisy-chain connection group (G1) is connected to the battery control unit; and
the first daisy-chain connection group (G1) comprises at least two battery modules (1000); in the first daisy-chain connection group (G1), the first connector (11a) of one battery management unit (100) is connected to the second connector (11b) of an adjacent battery management unit (100) by the communication harness (300).
